# EUROPEAN PATENT SPECIFICATION

(11) **EP 0 480 766 B1**
(45) Date of publication and mention of the grant of the patent: **04.05.1994**
(21) Application number: 91309403.3
(22) Date of filing: 11.10.1991
(51) Int. Cl.: F16L 1/12, F16L 37/12

(54) **Subsea connection system and a mobile connector utilized in said system**
Unterwasserverbindungssystem und bewegliche Verbindungseinrichtung für dieses System
Système de connexion sous marine et un connecteur pour le même système

(30) Priority: 12.10.1990 BR 9005132
(43) Date of publication of application: 15.04.1992
(73) Proprietor: PETROLEO BRASILEIRO S.A. - PETROBRAS, Rio de Janeiro (BR)
(72) Inventor: Paulo, Cezar Augusto Silva, Rio de Janeiro (BR)
(74) Representative: Barlow, Roy James

(56) References cited:
- EP-A- 0 296 137
- DE-A- 3 707 348
- US-A- 4 730 853

## Description

This invention relates to a subsea connection system intended to allow for the installation of subsea equipment or modules which must be locked to two mandrels of structures set at the sea bottom, so as to establish a structural and fluid-flow continuity between these two structures.

In subsea connection systems so far utilized, intended for the installation of subsea equipment or modules which must be locked to two mandrels of structures set at the sea bottom, a subsea module is installed by a tool supported by a vessel by means of a column. The subsea module is provided with two vertical connectors for locking to the mandrels rigidly integrated to the structures which support it, set at the sea bottom. However, since these types of system, which provide the basis for the prior art portion of claim 1, utilize the provision of vertical connectors rigidly fastened to a structure they present as a major disadvantage at the time of the connecting operation, the inability to compensate for the linear and angular misalignments which occur between the two mandrels, rendering such simultaneous connection in most cases unsuccessful.

The present invention, as defined in claim 1, overcomes this disadvantage in that the first main connector fixed thereto and a second lateral connector laterally displaced therefrom, said first and second connectors being adapted to be coupled, respectively, to a main mandrel and to a lateral mandrel which are rigidly integrated to the structures set at the sea bottom; characterised in that the second connector is axially and tiltably movable relatively to the module and to the main connector for compensating for linear and angular misalignment between the main and lateral mandrels to which the first and second connectors are to be coupled.

This mobility achieved by the subsea connection system of this invention is preferably due to the provision, in a simple and effective construction, of an active lateral connector provided internally with a locking and sealing assembly which is supported by pins captive in the orifices of an intermediate jacket which, in its turn, is supported by pins on a diameter 90° displaced in relation to the diameter on which the above-mentioned orifices are arranged.

In order that the present invention may more readily be understood the following description is given, merely by way of example, with reference to the accompanying drawings, in which:-
FIGURE 1 illustrates a first embodiment of the subsea connection system of this invention, showing the subsea module suspended by the installation tool;
FIGURE 2 corresponds to Figure 1 but shows the subsea module set and locked on the main mandrel, with the active lateral connector retracted and unlocked;
FIGURE 3 corresponds to Figures 1 and 2 but shows the active lateral connector now extended, positioned and locked to the lateral mandrel;
FIGURES 4 to 6 represent enlarged longitudinal sectional views of the active lateral connector utilized in the system of this invention, showing details of coupling of the active lateral connector to a lateral mandrel which is laterally displaced and inclined in relation to the main mandrel;
FIGURE 7 is an enlarged detail of Figures 4 and 5, the left hand side of Figure 7 corresponding to Figure 4 and the right hand side corresponding to Figure 5, but with the mandrel 26 omitted from Figure 7;
FIGURE 8 is a longitudinal section of the active lateral connector on a plane of section 90° different in relation to that of Figures 4 to 7;
FIGURE 9 is an enlarged detail of the rotation-limitation key shown in Figure 8;
FIGURE 10 is a longitudinal section of another embodiment of the active lateral connector, in which the upward and downward movement of the external jacket is obtained by means of hydraulic cylinders;
FIGURE 11 is a longitudinal section of the active lateral connector, in which the external jacket is biassed downwards by means of springs; and
FIGURE 12 illustrates the subsea module provided with pipes having their own structural flexibility.

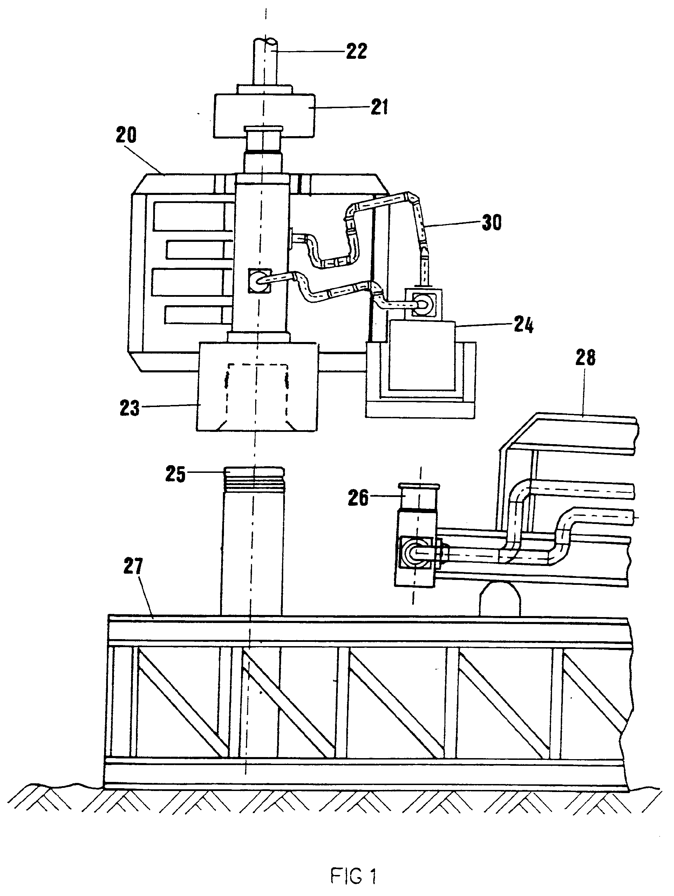

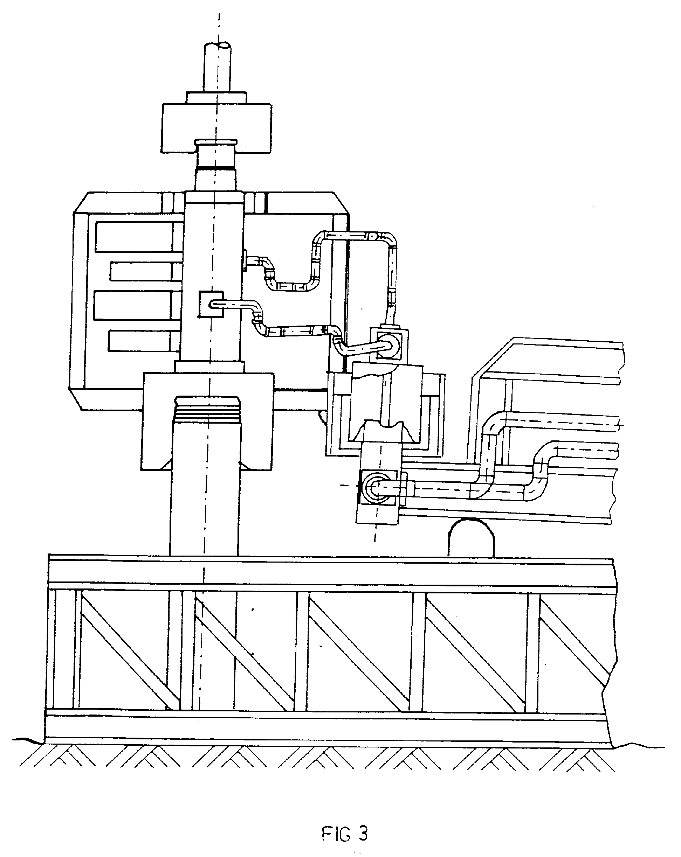

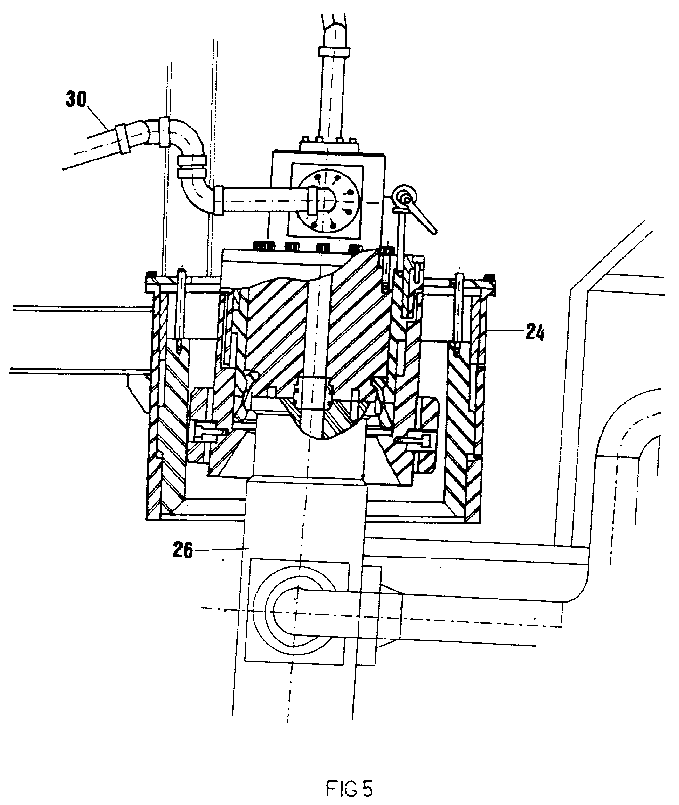

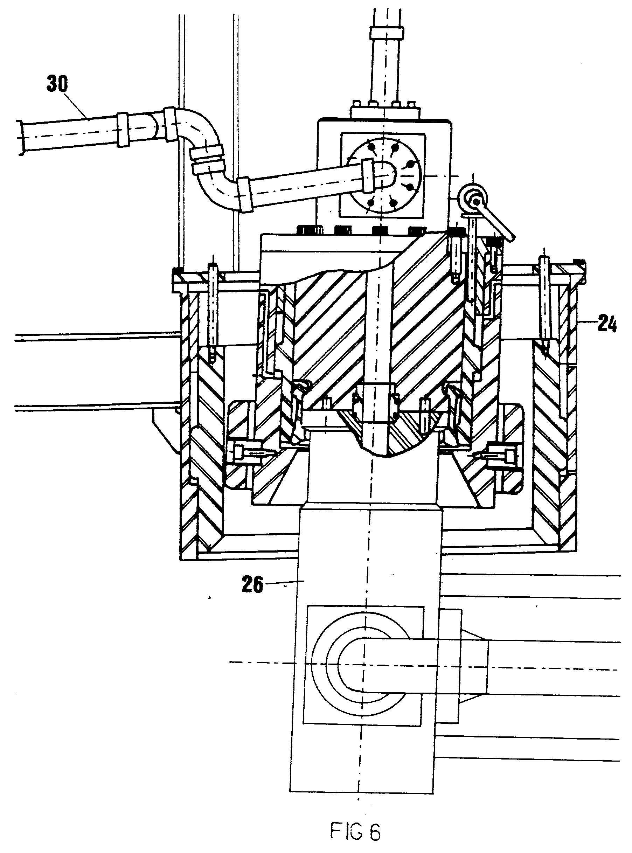

As can be inferred from Figure 1, a subsea module 20 is being installed by a tool 21 supported by a vessel by means of a column 22. The subsea module 20 is provided with a main connector 23 and a lateral connector 24 for the purposes of locking both to the main mandrel 25 and to the lateral mandrel 26 which are rigidly integrated to the structures 27 and 28, respectively, set at the seabottom. The sequence of operations will now be described in detail with its different steps being shown in Figures 1 through 6.

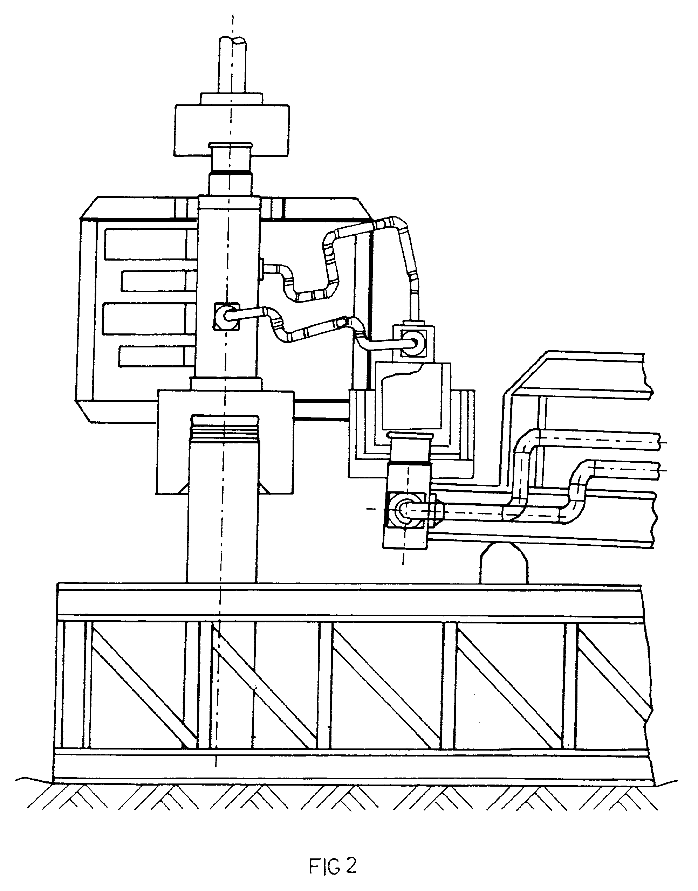

During the lowering of the subsea module 20 the active (mobile) lateral connector 24 is maintained retracted and unlocked, by means of hydraulic pressure originating from the tool 21. The subsea module 20 is then set on to the main mandrel 25 and the main connector 23 is locked (as shown in Figure 2); during this phase, the lateral connector 24 has not engaged the lateral mandrel 26.

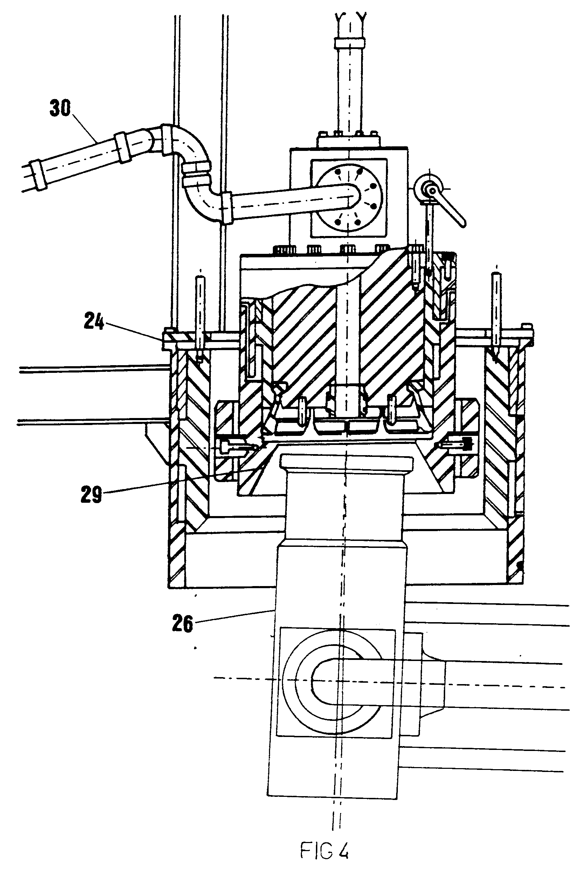

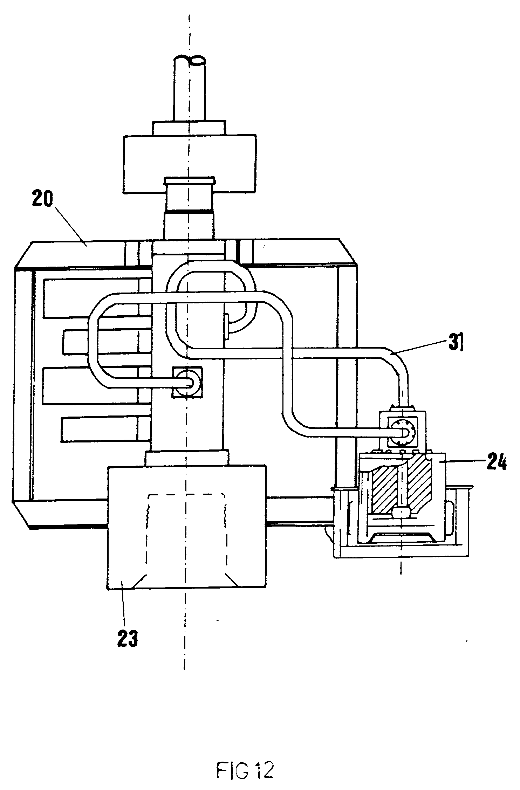

The lateral connector 24 is then extended, upon application of hydraulic pressure originating from the tool 21, and is forced downwards so that its tapered guide 29 (Figure 4) comes into contact with the lateral mandrel 26 and, due to its degrees of freedom of linear and rotational displacements, it adjusts itself to the lateral mandrel 26 in assuming its positioning. for this displacement of the active lateral connector 24 to be possible, the piping 30 of the subsea module 20 must be flexible, and this flexibility may be achieved through the articulated pipework 30 shown on Figures 1 to 6, or by means of inherently flexible pipes 31 as shown in Figure 12.

After the active lateral connector 24 has engaged the lateral mandrel 26, it is locked by means of the application of hydraulic pressure from the tool 21 and, once the connection is completed, the tool 21 is disconnected from the subsea module 20 and returned to the surface, the subsea module 20 then having been installed and connected to the mandrels 25 and 26 with the desired structural and fluid-flow continuity between the structures 27 and 28.

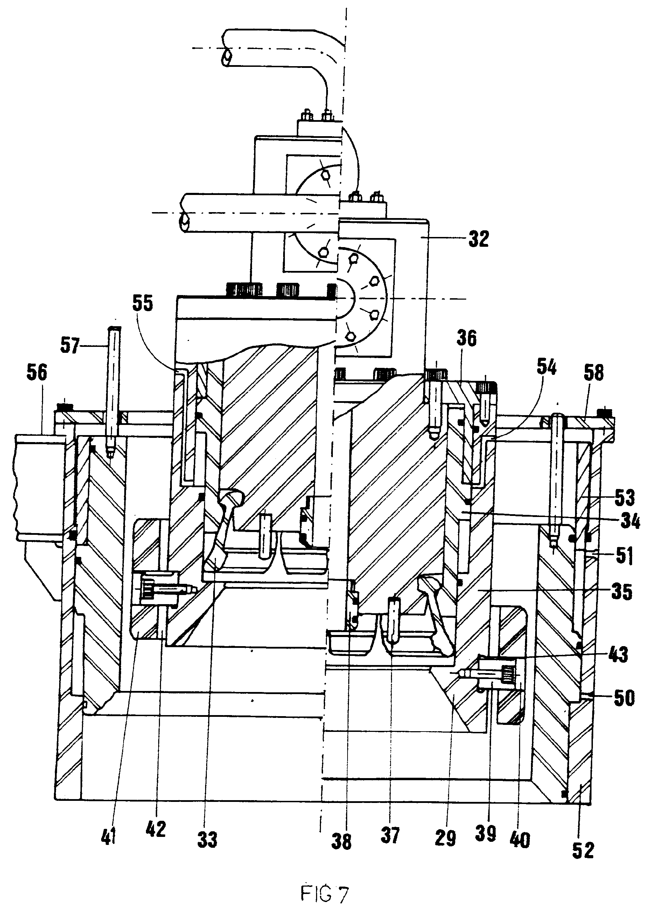

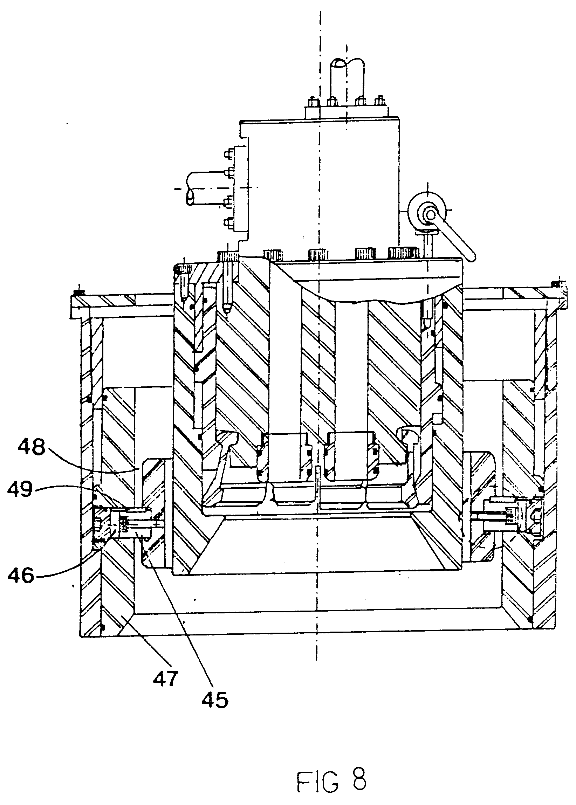

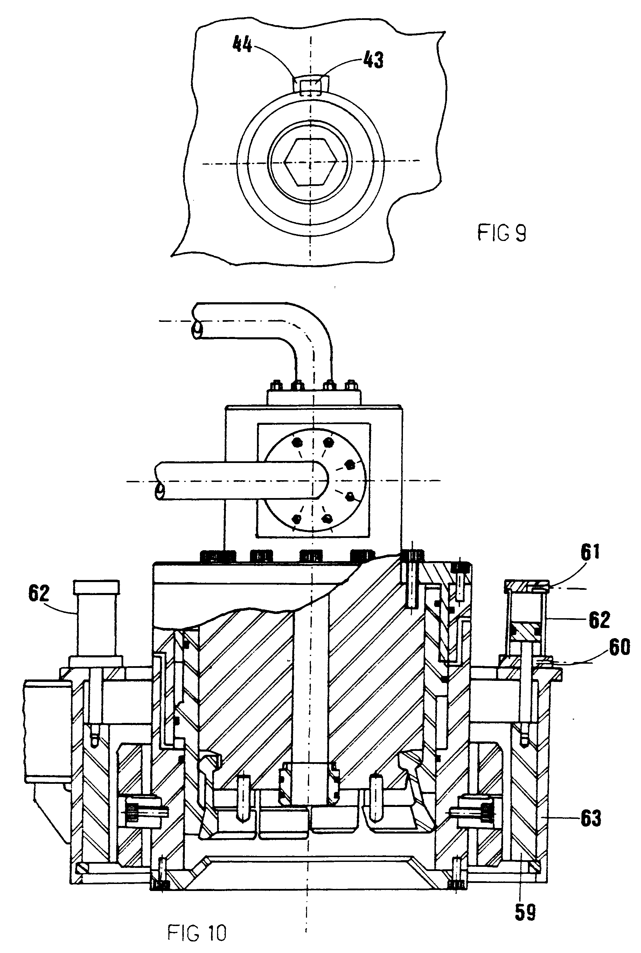

The active lateral connector 24 utilized in the subsea connection system, is represented in more detail in Figures 7 and 8 as longitudinal sections with a 90° difference between Figure 7 and Figure 8. It includes, in its innermost part, a locking and sealing assembly consisting of a body 32, chuck jaws 33, a locking ring 34, a jacket 35, a cover 36, a tapered guide 29, a guide pin 37 and a sealing coupling 38. The locking and sealing assembly 29, 32-38 is supported by two pins 39 captive in the orifices 40 of the intermediate jacket 41, but free to displace axially along the orifices 40 utilizing the play 42 and being free to rotate in the orifices 40 with rotation limitation provided by the key 43 and by the play of a key slot 44, as shown in detail on Figure 9.

The intermediate jacket 41 is in turn supported by two pins 45 arranged on a diameter 90° different in relation that passing through the orifices 40. Such pins 45 are captive in orifices 46 of an external jacket 47, and are each free to displace along the axis of the respective orifice 46 utilizing the play 48 and are free to rotate in the orifices 46, with rotation limitation provided by the key 49 and by the play of the key slot of the orifices 46, in a manner identical to that of the key 43 and key slot 44 shown in Figure 9.

In a first embodiment of the active lateral connector 24, the external jacket 47 is moved vertically upwards and downwards, by the application of hydraulic pressure to the pressure inlets 50 and 51 (Figure 7), so as to achieve retraction and the extension of the locking and sealing assembly, said external jacket 47 then consisting of an annular piston and the pressure chamber being formed by the outer body 52 of the external jacket 47 and by a stop 53.

The locking is achieved by the application of hydraulic pressure to the pressure inlet 54 which promotes the lowering of the locking sleeve 34 which in turn moves the chuck jaws 33 to the connector-locked position.

Unlocking is achieved by the application of hydraulic pressure to the pressure inlet 55 which moves the locking sleeve 34 upwards, making the chuck jaws 33 open to assume the connector-unlocked position.

It must be pointed out that the outer body 52 is rigidly fastened to the subsea module 20 by means of a beam 56, so there is therefore no relative movement between the outer body 52 and the main connector 23 of the module. In addition, so as to prevent the external jacket 47 from rotating randomly around its own axis, two alignment pins 57 fastened to the external jacket 47 also pass with play through orifices of the anti-rotation plate 58 bolted to the outer body 52.

In a second embodiment of the active lateral connector 24, shown in Figure 10, the upward and downward movement of the external jacket, here referenced 59, is achieved upon the application of hydraulic pressure to the pressure inlets 60 and 61 of hydraulic cylinders 62 bolted to the top of the outer body 63 of the external jacket 59.

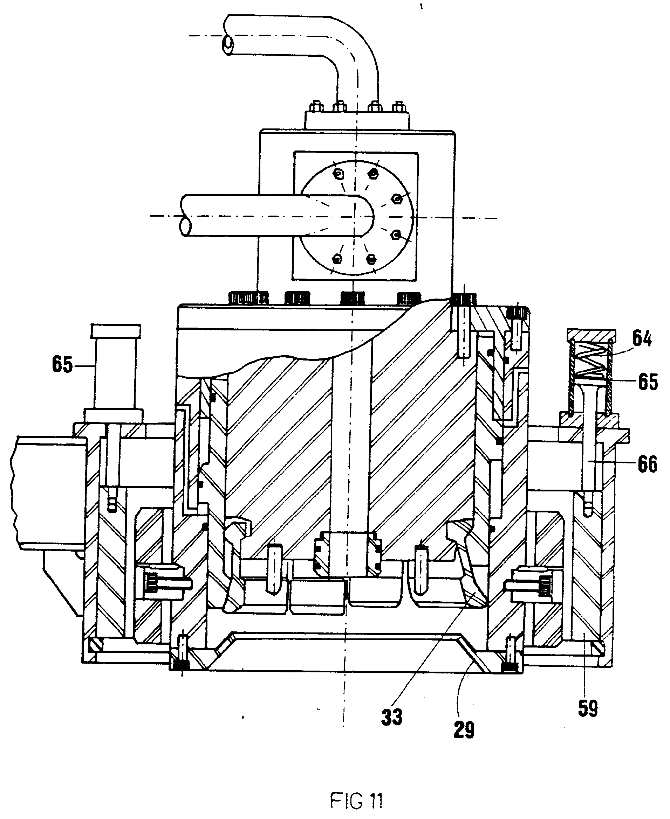

In a third embodiment of the active lateral connector 24, shown in Figure 11, the external jacket 59 is maintained in its lowermost position by the constant biassing action of springs 64 which are contained in spring cases 65 and which act on the rods 66 fastened to the external jacket 59; thus, the active lateral connector 24 is always held yieldably in its extended position. As the subsea module 20 is lowered on to the main mandrel 25, the tapered guide 29 engaging the lateral mandrel 26 forces the lateral connector 24 to assume the same positioning as the lateral mandrel 26, such movement being possible due to the degrees of freedom of the lateral connector 24 and due to the flexibility of the articulated pipework 30 (Figures 1 to 6) or the inherently flexible piping 31 (Figure 12). The springs 64 force the locking and sealing assembly downwards, towards the upper face of the lateral mandrel 26, so as to allow the lateral connector 24 to be locked to the lateral mandrel 26 through the action of the chuck jaws 33.

## Claims

1. A subsea connection system and mobile lateral connector for the installation of subsea equipment or modules which must be locked to two mandrels of structures set at the seabottom, including a subsea module (20), a carrying vertical first main connector (23) fixed thereto and a second lateral connector (24) laterally displaced therefrom, said first and second connectors being adapted to be coupled, respectively, to a main mandrel (25) and to a lateral mandrel (26) which are rigidly integrated to the structures (27, 28) set at the sea bottom; characterised in that the second connector (24) is linearly and tiltably movable relatively to the module and to the main connector for compensating for linear and angular misalignment between the main and lateral mandrels (25 and 26) to which the first and second connectors (23 and 24) are to be coupled.

2. A subsea connection system according to claim 1, characterized in that such mobile lateral connector includes a locking and sealing assembly consisting of a body (32), chuck jaws (33), a locking sleeve (34), a jacket (35), a cover (36), a tapered guide (29), a guide pin (37), a sealing coupling (38), and an intermediate jacket (41) supporting said jacket (35) for pivoting about a diametral axis.

3. A subsea connection system according to claim 2, characterized in that said intermediate jacket (41) is supported for pivoting about a diametral axis relative to an external jacket (47; 59); in that supporting means (39) of said locking and sealing assembly (29, 32-39) are captive in orifices (40) on a diameter of said intermediate jacket (41); and in that supporting means (45) of said intermediate jacket (41) are arranged on a diameter 90° displaced in relation to the diameter of the first-mentioned orifices and are captive in further orifices (46) of the external jacket (47).

4. A subsea connection system according to claim 3, characterized by the fact that said intermediate jacket (41) is displaceable relative to said locking and sealing assembly in a direction axially along the first-mentioned orifices (40) utilizing available play (42) and are rotatable in said first-mentioned orifices (40) with rotation limitation provided by a key (43) and by play of a key slot (44).

5. A subsea connection system according to claim 2 or 3, characterized by the fact that said external jacket (47) is displaceable relative to said intermediate jacket in a direction axially of said further orifices (46) utilizing available play (48) and is rotatable in said orifices (46) with rotation limitation provided by the key (49) and by play of a key slot of each said further orifice (46).

6. A subsea connection system according to any one of claims 3 to 5, characterized by the fact that said external jacket (47; 59) is movable vertically upwards and downwards upon the application of hydraulic pressure to the pressure inlets (50, 51; 60, 61) for retraction and extension of said locking and sealing assembly, the locking effect being achieved by the application of hydraulic pressure to a pressure inlet (54) promoting lowering of the locking sleeve (34) and moving the chuck jaws (33) to the connector-locked position, and the unlocking effect being achieved upon the application of hydraulic pressure to a pressure inlet (55) which moves the locking ring (34) upwards, opening the chuck jaws (33) to assume the connector-unlocked position.

7. A subsea connection system according to claim 6, characterized by the fact that said external jacket (47) acts as an annular piston and the pressure chamber is formed by an outer body (52) and by a stop (53) thereof.

8. A subsea connection system according to claim 6 or 7, characterized by the fact that the upward and downward of the external jacket (59) is achieved upon the application of hydraulic pressure to pressure inlets (60, 61) of hydraulic cylinders (62) fastened to the top of the outer body (63).

9. A subsea connection system according to any one of claims 3 to 5, characterized by the fact that said external jacket (59) is yieldably held in its lowermost position through the constant biassing action of springs (64) contained in spring cases (65) which act on rods (66) fastened to said external jacket (59), thereby maintaining the connector always in its extended position.

10. A subsea connection system according to claim 9, characterized by the fact that said springs (64) force said locking and sealing assembly downwards, towards the upper face of a said lateral mandrel (26), said mobile lateral connector (24) being lockable to said lateral mandrel (26) through the action of the chuck jaws (33).

## Patentansprüche

1. Unterwasserverbindungssystem und bewegliches seitliches Verbindungsglied für die Installation von Unterwasserausrüstungsteilen oder Modulen, die an zwei Dornen von Strukturen, die auf dem See- bzw. Meeresboden festgesetzt sind, festgesetzt werden müssen, mit einem Unterwassermodul (20), einem tragenden vertikalen ersten Hauptverbindungsglied (23), das daran befestigt ist, und einem zweiten seitlichen Verbindungsglied (24), das seitlich davon versetzt ist, wobei die ersten und zweiten Verbindungsglieder so ausgelegt sind, daß sie jeweils auf einem Hauptdorn (25) und einem Nebendorn (26) befestigt werden können, die starr in die Strukturen (27, 28) eingegliedert sind, die auf dem See- bzw. Meeresboden festgesetzt sind, dadurch gekennzeichnet, daß das zweite Verbindungsglied (24) linear und kippbar relativ zu dem Modul und dem Hauptverbindungsglied bewegt werden kann, um eine lineare und winkelmäßige Versetzung zwischen den Haupt- und Nebendornen (25 und 26) auszugleichen, an denen die ersten und zweiten Verbindungsglieder (23 und 24) befestigt werden sollen.

2. Unterwasserverbindungssystem nach Anspruch 1, dadurch gekennzeichnet, daß das bewegliche seitliche Verbindungsglied eine Festsetz- und Abdichtanordnung umfaßt, die aus einem Körper (32), Spannbacken (33), einer Feststellmuffe (34), einer Ummantelung (35), einer Abdeckung (36), einer kegelförmigen Führung (29), einem Führungsbolzen (37), einer Abdichtkuppelvorrichtung (38) und einem Zwischenmantel (41) besteht, der die Ummantelung (35) derart abstützt, daß diese um eine diametrale Achse verschwenkt werden kann.

3. Unterwasserverbindungssystem nach Anspruch 2, dadurch gekennzeichnet, daß der Zwischenmantel (41) derart gestützt wird, daß er um eine diametrale Achse relativ zu einer äußeren Ummantelung (47; 59) verschwenkt werden kann, daß Tragmittel (39) der Festsetz- und Abdichtanordnung (29, 32-39) in Öffnungen (40) auf einem Durchmesser des Zwischenmantels (41) gehalten werden; und daß Tragmittel (45) des Zwischenmantels (41) auf einem Durchmesser angeordnet sind, der um 90° versetzt relativ zu dem Durchmesser der zuerst genannten Öffnungen ist, und in weiteren Öffnungen (46) der äußeren Ummantelung (47) gehalten werden.

4. Unterwasserverbindungssystem nach Anspruch 3, dadurch gekennzeichnet, daß der Zwischenmantel (41) relativ zu der Festsetz- und Abdichtanordnung in einer Richtung axial entlang den zuerst genannten Öffnungen (40) unter Ausnutzung des vorhandenen Spiels (42) verschoben werden kann und in den zuerst genannten Öffnungen (40) gedreht werden kann, wobei durch einen Keil (43) und das Spiel einer Keilnut (44) eine Rotationsbegrenzung vorgesehen ist.

5. Unterwasserverbindungssystem nach Anspruch 2 oder 3, dadurch gekennzeichnet, daß die äußere Ummantelung (47) relativ zu dem Zwischenmantel in einer Richtung axial zu den weiteren Öffnungen (46) unter Ausnutzung des vorhandenen Spiels (48) verschoben werden kann und in den Öffnungen (46) gedreht werden kann, wobei durch den Keil (49) und das Spiel einer Keilnut jeder weiteren Öffnung (46) eine Rotationsbegrenzung vorgesehen wird.

6. Unterwasserverbindungssystem nach einem der Ansprüche 3 bis 5, dadurch gekennzeichnet, daß die äußere Ummantelung (47; 59) vertikal nach oben und nach unten bewegt werden kann, wenn ein hydraulischer Druck an die Druckeinlaßöffnungen (50, 51; 60, 61) zum Zurückziehen und zum Ausfahren der Festsetz- und Abdichtanordnung angelegt wird, wobei der Festsetzeffekt durch das Anlegen von Hydraulikdruck an eine Druckeinlaßöffnung (54) erzielt wird, die das Herablassen der Feststellmuffe (34) unterstützt und die Spannbacken (33) zu der Verriegelungslage des Verbindungsglieds bewegt, und der Entriegelungseffekt wird durch das Anlegen von Hydraulikdruck an eine Druckeinlaßöffnung (55) erreicht, die den Feststellring (34) nach oben bewegt, wodurch die Spannbacken (33) geöffnet werden, um die offene Lage des Verbindungsglieds einzunehmen.

7. Unterwasserverbindungssystem nach Anspruch 6, dadurch gekennzeichnet, daß die äußere Ummantelung (47) als ein ringförmiger Kolben wirkt und die Druckkammer von einem Außenkörper (52) und einem Anschlag (53) davon gebildet wird.

8. Unterwasserverbindungssystem nach Anspruch 6 oder 7, dadurch gekennzeichnet, daß die Aufwärts- und Abwärtsbewegung der äußeren Ummantelung (59) durch das Anlegen von Hydraulikdruck an die Druckeinlaßöffnung (60, 61) der Hydraulikzylinder (62) erzielt wird, die am oberen Ende des Außenkörpers (63) befestigt sind.

9. Unterwasserverbindungssystem nach einem der Ansprüche 3 bis 5, dadurch gekennzeichnet, daß die äußere Ummantelung (59) in ihrer untersten Lage durch die konstante Vorbelastungswirkung der in Federgehäusen (65) enthaltenen Federn (64), die auf Stangen (66) einwirken, die an der äußeren Ummantelung (59) befestigt sind, nachgiebig gehalten wird, wodurch das Verbindungsglied immmer in seiner ausgefahrenen Lage gehalten wird.

10. Unterwasserverbindungssystem nach Anspruch 9, dadurch gekennzeichnet, daß die Federn (64) die Festsetz- und Abdichtanordnung nach unten in Richtung auf die Oberfläche eines Nebendorns (26) drücken, wobei das bewegliche seitliche Verbindungsglied (24) an dem Nebendorn (26) durch die Wirkung der Spannbacken (33) festgesetzt werden kann.

## Revendications

1. Système de connexion sous-marine et connecteur latéral mobile pour l'installation d'équipements ou de modules sous-marins qui doivent être bloqués sur deux mandrins de structures installées au fond de la mer, comprenant un module sous-marin (20), un premier connecteur principal vertical porteur (23) fixé à ce module et un deuxième connecteur latéral (24) décalé latéralement de celui-ci, le premier et le deuxième connecteurs étant à même d'être couplés, respectivement, à un mandrin principal (25) et un mandrin latéral (26) qui sont intégrés de manière rigide aux structures (27, 28) installées au fond de la mer, caractérisés en ce que le deuxième connecteur (24) peut se déplacer de manière linéaire et s'incliner par rapport au module et au connecteur principal pour compenser le défaut d'alignement linéaire et angulaire entre les mandrins principal et latéral (25 et 26) auxquels le premier et le deuxième connecteurs (23 et 24) doivent être couplés.

2. Système de connexion sous-marine selon la revendication 1, caractérisé en ce que ledit connecteur latéral mobile comprend un ensemble de blocage et d'étanchéité comprenant un corps (32), des mors de serrage (33), un manchon de blocage (34), une chemise (35), une coiffe (36), un guide conique (29), une broche de guidage (37), un couplage d'étanchéité (38) et une chemise intermédiaire (41) supportant ladite chemise (35) afin qu'elle puisse pivoter autour d'un axe diamétral.

3. Système de connexion sous-marine selon la revendication 2, caractérisé en ce que ladite chemise intermédiaire (41) est supportée de manière à pouvoir pivoter autour d'un axe diamétral par rapport à une chemise externe (47,59), des moyens de support (39) dudit ensemble de blocage et d'étanchéité (29, 32-39) sont captifs dans les orifices (40) sur un diamètre de ladite chemise intermédiaire (41), et des moyens de support (45) de ladite chemise intermédiaire (41) sont agencés décalés diamétralement de 90° par rapport au diamètre des premiers orifices mentionnés et sont captifs dans d'autres orifices (46) de la chemise externe (47).

4. Système de connexion sous-marine selon la revendication 3, caractérisé en ce que ladite chemise intermédiaire (41) peut être déplacée par rapport audit ensemble de blocage et d'étanchéité dans la direction axiale le long des premiers orifices mentionnés (40) en utilisant le jeu disponible (42) et peuvent tourner dans lesdits premier orifices mentionnés (40), ladite rotation étant limitée par une clavette (43) et par le jeu d'une fente de clavette (44).

5. Système de connexion sous-marine selon la revendication 2 ou 3, caractérisé en ce que ladite chemise externe (47) est déplaçable par rapport à ladite chemise intermédiaire dans la direction axiale desdits autres orifices (46) en utilisant le jeu disponible (48) et peut tourner dans lesdits orifices (46) avec une limitation de rotation fournie par la clavette (49) et par le jeu d'une fente de clavette de chacun desdits autres orifices (46).

6. Système de connexion sous-marine selon l'une quelconque des revendications 3 à 5, caractérisé en ce que ladite chemise externe (47, 59) peut se déplacer verticalement vers le haut et vers le bas par l'application d'une pression hydraulique aux entrées de pression (50, 51; 60, 61) pour mettre en retrait et en extension ledit ensemble de blocage et d'étanchéité, l'effet de blocage étant obtenu par l'application d'une pression hydraulique à l'entrée de pression (54) qui entraîne l'abaissement du manchon de blocage (34) et le déplacement des mors de serrage (33) dans la position de blocage du connecteur, et l'effet de déblocage étant assuré par l'application d'une pression hydraulique à l'entrée de pression (55) qui déplace la bague de blocage (34) vers le haut, ouvrant les mors de serrage (33) pour assumer la position de déblocage du connecteur.

7. Système de connexion sous-marine selon la revendication 6, caractérisé en ce que ladite chemise externe (47) joue le rôle de piston annulaire et la chambre de pression est formée par un corps externe (52) et par un arrêt (53) de celui-ci.

8. Système de connexion sous-marine selon la revendication 6 ou 7, caractérisé en ce que le mouvement ascendant et descendant de la chemise externe (59) est obtenu par l'application d'une pression hydraulique aux entrées de pression (60, 61) de cylindres hydrauliques (62) fixés à la partie supérieure du corps externe (63).

9. Système de connexion sous-marine selon l'une quelconque des revendications 3 à 5, caractérisé en ce que ladite chemise externe (59) est maintenue de manière élastique dans sa position inférieure par l'action de sollicitation permanente de ressorts 64 contenus dans des cages de ressorts (65) qui agissent sur des tiges (66) fixées à ladite chemise externe (59), maintenant de la sorte toujours le connecteur dans sa position d'extension.

10. Système de connexion sous-marine selon la revendication 9, caractérisé en ce que lesdits ressorts (64) pressent ledit ensemble de blocage et d'étanchéité vers le bas, vers la face supérieure dudit mandrin latéral (26), ledit connecteur latéral mobile (24) pouvant être bloqué sur ledit mandrin latéral (26) par l'action des mors de serrage (33).
